# EUROPEAN PATENT SPECIFICATION

(11) **EP 0 979 192 B1**
(45) Date of publication and mention of the grant of the patent: **19.12.2001**
(21) Application number: 98919386.7
(22) Date of filing: 05.05.1998
(51) Int. Cl.: B62D 21/15

(54) **IMPACT RESISTANT CHASSIS**
AUFPRALLRESISTENTE KFZ-RAHMEN
CHASSIS RESISTANT AUX CHOCS

(30) Priority: 02.05.1997 GB 9709067
(43) Date of publication of application: 16.02.2000
(73) Proprietor: Randle, James Neville, Welford on Avon, Warwicks. CV37 8EF (GB)
(72) Inventor: Randle, James Neville, Welford on Avon, Warwicks. CV37 8EF (GB)
(74) Representative: Wise, Stephen James
(86) International application number: GB9801302
(87) International publication number: WO9850266

(56) References cited:
- EP-A- 0 574 281
- DE-A- 4 040 979
- US-A- 3 881 742
- US-A- 3 883 166
- US-A- 3 971 588
- US-A- 4 836 321
- US-A- 5 048 888

## Description

The invention relates to a vehicle, more particularly a land vehicle. It is well known that vehicles are prone to impacts and crashes. It is known to provide crush tubes alongside and projecting forward from the engine in the engine front compartment of a vehicle so that in the event of a front crash the tubes will collapse to protect the driver and passeligers in the passenger compartment.

It is an object of this invention to provide a vehicle having an improved impact absorbing device.

It is known from US Patent No 3,971,588 to provide a motor vehicle having an engine and a body structure arranged to carry the engine, the structure having a forward impact absorbing device projecting forward of the engine, the device being arranged to collapse rearwardly so as to absorb forces due to a collision at the forward end, the structure having a pair of forked members each comprising a forward portion extending to the impact absorbing device and fork arms extending rearwardly, a first of the fork arms being connected to a transverse part of the body structure and a second of the fork arms being connected to a longitudinal sill part of the body structure, the engine being mounted to the body structure so that on collision at the forward end, the forward kinetic energy of the engine acts on the impact absorbing device. This arrangement is designed to limit energy dissipating deformations of the structure to those parts of the vehicle outside the passenger space but the overall effect is limited. It is further known from DE 4 040 979 A1 to provide first and second vertically spaced fork arms, the lower and first one of each pair of arms being weaker than the upper and second arm. This causes the engine in a collision to be deflected downwards but again the overall effect on injury to occupants is limited.

Accordingly the invention is characterised in that the resulting forked structure of a generally Y shape is as seen in plan with the first of the fork arms projecting towards the longitudinal axis of the vehicle and the second of the fork arms being horizontally spaced outwards from the first of the fork arms so that in the case of the forward collision acting asymmetrically with respect to the longitudinal axis of the vehicle, the weaker fork arm collapses before the stronger fork arm to cause rotation of the forward end of the vehicle.

The weaker fork arm may take a variety of forms; preferably it comprises a tubular element of relatively reduced cross-sectional area compared to the stronger fork arm. The weaker arm may be as little as 10% weaker than the stronger fork arm but is preferably about 20% weaker.

Preferably the impact absorbing device comprises an elongate tubular element rigidly mounted to the forked members. It is much preferred that two impact absorbing devices are present, one on each side. In such a case it is much preferred that a cross member bridges the two elongate tubular elements at a location in front of the engine such that the engine acts on the cross member to transmit forces to the elongate tubular elements as the engine moves forward on impact of the vehicle with a front obstacle.

The tubular elements may be formed of steel or aluminium. Preferably the tubular elements and the sills are formed as extrusions, and have a box section but they may have a circular or oval cross section.

Certain components of the device are collapsible by which is meant that they will collapse under the impact of a collision. The degree of collapsibility is selected according to the requirement for safety in the event of a oollision. The components may be friable in the sense that they will be crushed to small particles, if that is appropriate.

The invention is especially effective in the case of a full frontal impact. When such impact occurs the mass of the engine in a front engined vehicle will trigger the crush sequence by engagement of the engine mass and the first cross member, thereby ensuring that the rearward end of the device collapses sequentially after collapse of the frangible forward structure. In addition however, this invention is particularly beneficial in the case of an offset crash situation which is generally regarded as the most representative crash test sequence and it is one that vehicles are least capable of resisting since the impacted obstacle is presented non-symmetrically to the friable structure at the front of the vehicle. This usually results in the structure deforming away from the impacted obstacle creating, in effect, a linkage which under the decelerative forces generated by the impact forces carries the impacting vehicle towards the impacted obstacle. According to the invention the geometry and balance of stiffness of either device will collapse sequentially so as to rotate the structure towards the impacted obstacle, thereby creating a linkage which will force the impacting vehicle away from the impacted obstacle. This is because in the case of an offset impact the weaker fork arm will collapse before, or at the same time as, the forward part of the structure thereby rotating the structure towards the impacted obstacle. Advantageously the decelerative forces resulting from the impact are directed into the outer structure of the passenger cell, thus greatly reducing the deformation of the passenger cell and thereby reducing the probability of injury to the vehicle occupants.

In order that the invention may be well understood it will now be described by way of example with reference to the accompanying diagrammatic drawings, in which
Figure 1 shows schematically a layout of a representative vehicle incorporating two impact absorbing devices of the invention;
Figure 2 shows the vehicle of Figure 1 at different stages after a front collision; and
Figure 3 shows the vehicle of Figure 1 at different stages after a sideways collision.

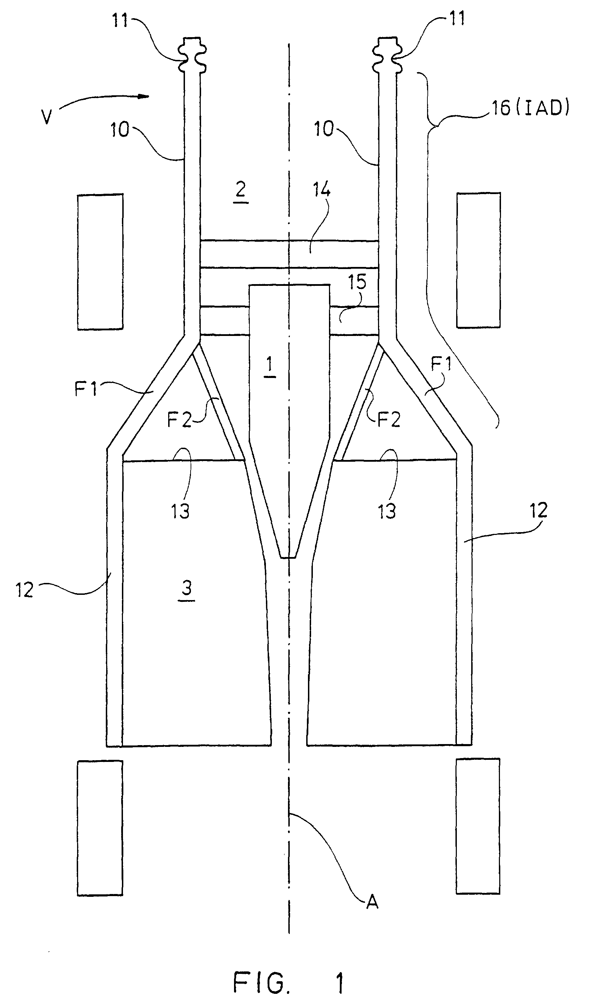

The vehicle V of Figure 1 has an engine 1 mounted in a forward engine compartment 2 to the rear of which is a passenger compartment or cell 3. The vehicle includes a pair of impact absorbing devices 16 IAD, one on each side of the vehicle and thus generally parallel to the longitudinal axis A of the vehicle. Each device comprises an elongate tubular element, 10, each made of metal such as aluminium or steel. The device may be a box section extrusion. The elements 10 project forward of the engine and have frangible end portion made up of sections 11 in the manner of known crush tubes. At their rearward end the elements 10 are connected to sills 12 by a fork arm F1, of substantially the same cross-sectional area. The bend may be made by the method of my British patent application GB9622234.4. A second fork arm F2, of relatively smaller cross section metal tube, extends from the rearward end of the tubular element 10, and is connected to the front wall 13 of the passenger compartment. The impact absorbing device is thus of generally Y shape as seen in plan, one arm of the Y being thinner than the other and so more collapsible. A first cross member 14 bridges the elements 10 slightly in front of the engine 1; a second cross member 15 is present just below the engine 1 and rearward of the first 14.

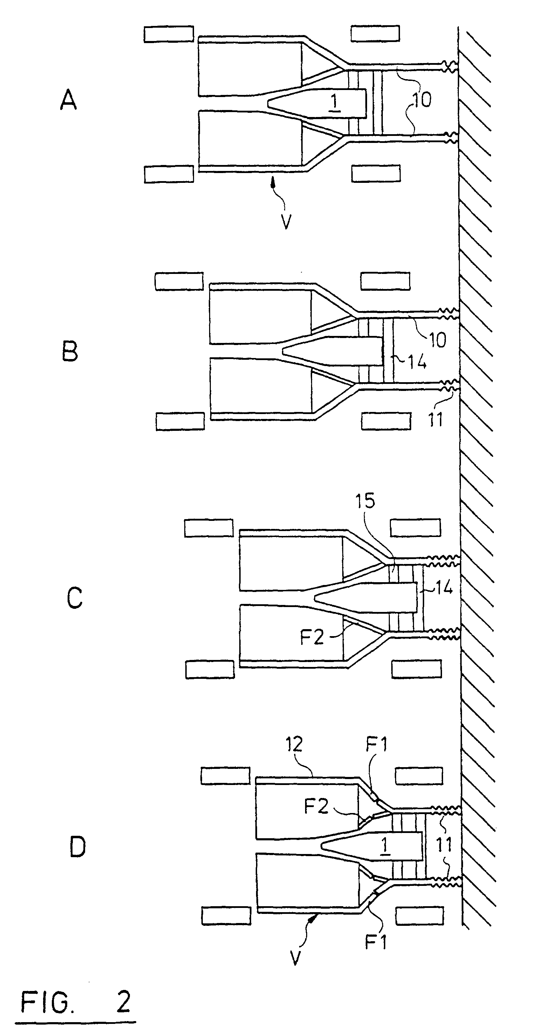

In the event of an impact occurring symmetrically about the vehicle centre-line, events occur in the sequence, as shown in Figure 2 from A to B.

Upon impact with tubes 11 engine 1 continues to move forwards as the vehicle decelerates until it engages with the first cross member 14. The decelerative forces required to slow the engine are then transferred into the element 10, thereby triggering collapse of the tubes 11. The forces imposed upon the supporting structure members, fork arms F1 and F2 are balanced and the structure remains stable, the forces required to decelerate the remaining mass of the vehicle being transmitted equally down the sills 12, which are an extension of the forks F1. When the collapsible tubes 11 have completely collapsed, the forces in the supporting structure rise and the forks F2 collapse absorbing the remaining decelerative energy. Once the fork arms F2 have collapsed any remaining impact forces are passed to the forks F1 and into the sills 12.

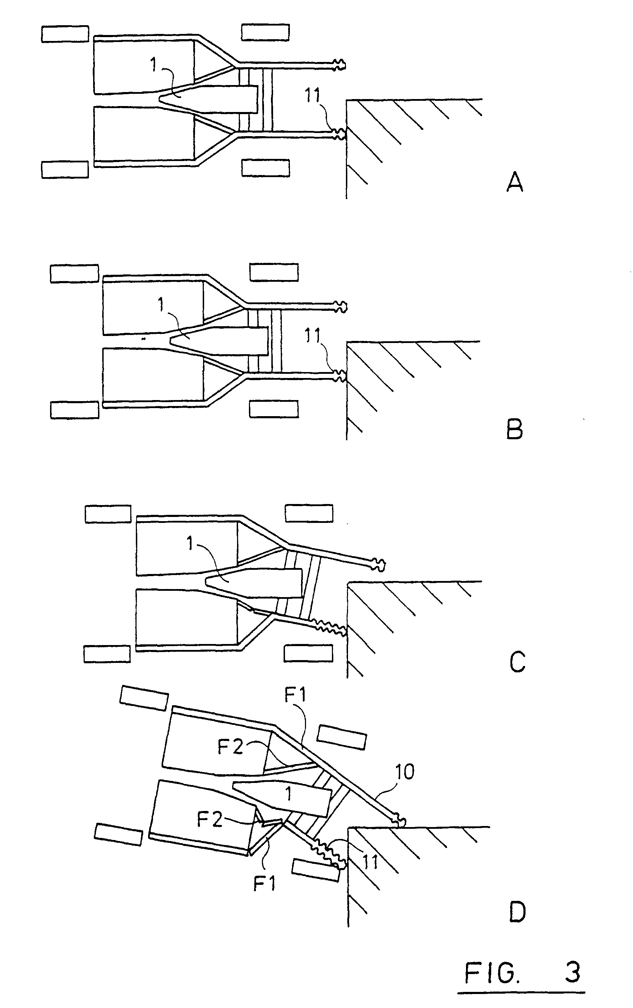

In the event of an offset impact, as shown in Figure 3, only the collapsible tube 11 on one side engages with the impacted object, hence the decelerative forces are approximately half that which would be experienced in a symmetrical impact; as a result, the engine 1 does not engage with the cross member 14 before the supporting structure members F1 and F2 on one side undergo the full decelerative forces. Under these circumstances the forces are not balanced across the supporting structure. Fork arm F2 then collapses, thereby causing the frangible structure to rotate towards the impacted object and in so doing, maximises the energy absorbing capabilities of the structure and generates a lateral force driving the vehicle away from the impacted object. As shown in the last view of Figure 3 the far arm fork F2 may separate from the element 10.

The invention is applicable to any automobile not only having a front mounted engine, such as a saloon or a sports car but also where the engine is centrally or rearwardly mounted, the action of the engine's movement during collision being transferred to the impact absorbing devices by suitable additional longitudinal structure.

## Claims

1. A motor vehicle (V) having an engine (1) and a body, structure arranged to carry the engine, the structure having' a forward impact absorbing device (16) projecting forward of the engine, the device being arranged to collapse rearwardly so as to absorb forces due to a collision at the forward end, the structure having a pair of forked members (10, F1, F2) each comprising a forward portion (10) extending to an impact absorbing element (11) and fork arms (F1, F2) extending rearwardly to other parts of the structure, wherein a first of the fork arms (72) is structurally weaker than a second of the fork arms (F1), the first and second fork arms forming a generally Y shape **characterised in that** the resulting forked structure of a generally Y shape is as seen in plan with the first of the fork arms projecting towards the longitudinal axis (A) of the vehicle and the second of the fork arms being horizontally spaced outwards from the first of the fork arms so that in the case of the forward collision acting asymmetrically with respect to the longitudinal axis of the vehicle, the weaker fork arm (F2) collapses before the stranger fork arm to cause rotation of the forward end of the vehicle.

2. A vehicle according to claim 1 wherein the engine (1) is forwardly mounted in the body structure.

3. A vehicle as claimed in any one of the preceding claims! wherein a pair of impact absorbing devices (16) is provided, one on each side of the forward part of the body structure.

4. A vehicle as claimed in claim 3 wherein a cross member (14) is provided transversely of the body structure to connect the impact absorbing devices such that on collision at the forward end, the angina acts on the cross member which transmits forces to both impact absorbing devices.

5. A vehicle according to claim 4 including a second cross member (15) provided transversely across the body structure to' the rear of the first cross member so as to connect the forked members.

6. A vehicle according to claim 1 wherein the engine is centrally or rearwardly mounted and wherein means (14) are provided to transmit any forward forces from the engine on collision to the impact absorbing device or devices.

## Patentansprüche

1. Ein Motorfahrzeug (V) mit einem Motor (1) und einer Körperstruktur, die zum Tragen des Motors ausgelegt ist, wobei die Struktur eine vordere Aufprall absorbierende Einrichtung (16) aufweist, die nach vorn über den Motor vorsteht, wobei die Einrichtung zum Kollabieren nach hinten ausgelegt ist, um Kräfte aufgrund einer Kollision an dem vorderen Ende zu absorbieren, wobei die Struktur ein Paar von gegabelten Elementen (10, F1, F2) aufweist, von denen jedes einen vorderen Abschnitt (10), der sich zu einem Aufprall absorbierenden Element (11) erstreckt, und Gabelarme (F1, F2) aufweist, die sich nach hinten zu anderen Teilen der Struktur erstrecken, wobei ein erster der Gabelarme (F2) strukturell schwächer als ein zweiter der Gabelarme (F1) ist und wobei der erste Gabelarm und der zweite Gabelarm im Wesentlichen eine Y-Gestalt bilden,
**dadurch gekennzeichnet, dass** die resultierende Gabelkonstruktion mit im Wesentlichen einer Y-Gestalt, wenn in Draufsicht betrachtet, so ausgebildet ist, dass der erste der Gabelarme in Richtung zu der Längsachse (A) des Fahrzeugs ragt und der zweite der Gabelarme von dem ersten der Gabelarme nach auswärts horizontal beabstandet ist, so dass im Fall der vorderen Kollision, die in Bezug auf die Längsachse des Fahrzeugs asymmetrisch wirkt, der schwächere Gabelarm (F2) vor dem stärkeren Gabelarm kollabiert, um eine Drehung des vorderen Endes des Fahrzeugs zu verursachen.

2. Ein Fahrzeug nach Anspruch 1,
bei dem der Motor (1) in der Körperstruktur vorne angeordnet ist.

3. Ein Fahrzeug, wie in einem der vorhergehenden Ansprüche beansprucht, bei dem ein Paar von Aufprall absorbierenden Einrichtungen (16)vorgesehen ist, und zwar je eine an jeder Seite des vorderen Teils der Körperstruktur.

4. Ein Fahrzeug, wie in Anspruch 3 beansprucht,
bei dem ein Querelement (14) in Querrichtung der Körperstruktur vorgesehen ist, um die Aufprall absorbierenden Einrichtungen derart zu verbinden, dass bei Kollision an dem vorderen Ende der Motor auf das Querelement einwirkt, das Kräfte zu beiden Aufprall absorbierenden Einrichtungen überträgt.

5. Ein Fahrzeug nach Anspruch 4,
das ein zweites Querelement (15) aufweist, das quer durch die Karosseriestruktur rückwärtig des ersten Querelements vorgesehen ist, um die gegabelten Elemente zu verbinden.

6. Ein Fahrzeug nach Anspruch 1,
bei dem der Motor in der Mitte oder hinten angeordnet ist und bei dem eine Einrichtung (14) vorgesehen ist, um irgendwelche nach vorn gerichteten Kräfte von dem Motor bei Kollision zu der Aufprall absorbierenden Einrichtung oder zu den Aufprall absorbierenden Einrichtungen zu übertragen.

## Revendications

1. Véhicule à moteur (V) ayant un moteur (1) et une structure de carrosserie conçue pour supporter le moteur, la structure ayant un dispositif d'absorption d'impact avant (16) dépassant à l'avant du moteur, le dispositif étant conçu pour s'écraser vers l'arrière de manière à absorber les forces dues à une collision à l'extrémité avant, la structure ayant une paire d'éléments fourchus (10, F1, F2) comportant chacun une partie avant (10) s'étendant vers un élément d'absorption d'impact (11) et des bras de fourche (F1, F2) s'étendant vers l'arrière vers les autres parties de la structure, dans lequel un premier des bras de fourche (F2) est structurellement plus fragile qu'un second des bras de fourche (F1), les premier et second bras de fourche formant une forme généralement de Y, **caractérisé en ce que** la structure fourchue résultante dont la forme est généralement celle d'un Y est, telle que vue en plan, avec le premier des bras de fourche dépassant vers l'axe longitudinal (A) du véhicule et le second des bras de fourche espacé horizontalement vers l'extérieur par rapport au premier des bras de fourche de sorte que, dans le cas où la collision avant s'effectue d'une manière asymétrique par rapport à l'axe longitudinal du véhicule, le bras de fourche (F2) le plus fragile s'écrase avant le bras de fourche le plus résistant de manière à provoquer une rotation de l'extrémité avant du véhicule.

2. Véhicule selon la revendication 1, dans lequel le moteur (1) est monté à l'avant sur la structure de carrosserie.

3. Véhicule selon l'une quelconque des revendications précédentes, dans lequel une paire de dispositifs d'absorption d'impact (16) est prévue de chaque côté de la partie avant de la structure de carrosserie.

4. Véhicule selon la revendication 3, dans lequel un élément transversal (14) est agencé transversalement par rapport à la structure de carrosserie pour relier les dispositifs d'absorption d'impact de telle sorte que, lors d'une collision à l'extrémité avant, le moteur agit sur l'élément transversal qui transmet les forces aux deux dispositifs d'absorption d'impact.

5. Véhicule selon la revendication 4, incluant un second élément transversal (15) agencé transversalement à travers la structure de carrosserie à l'arrière du premier élément transversal de manière à relier les éléments fourchus.

6. Véhicule selon la revendication 1, dans lequel le moteur est monté au centre ou à l'arrière et dans lequel des moyens (14) sont prévus pour transmettre les forces dirigées vers l'avant exercées par le moteur, lors d'une collision, au dispositif ou aux dispositifs d'absorption d'impact.
